(19) **Europäisches Patentamt European Patent Office Office européen des brevets**

(11) **EP 4 539 285 A1**

(12) **EUROPÄISCHE PATENTANMELDUNG**

(43) Veröffentlichungstag:
**16.04.2025 Patentblatt 2025/16**

(21) Anmeldenummer: **24205491.4**

(22) Anmeldetag: **09.10.2024**

(51) Internationale Patentklassifikation (IPC):
**H02H 9/02** (2006.01)   **H01F 38/02** (2006.01)
**H01F 3/10** (2006.01)   **H01F 27/40** (2006.01)

(52) Gemeinsame Patentklassifikation (CPC):
**H01F 38/02; H01F 27/402; H02H 9/021;**
H01F 2003/103

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(30) Priorität: **10.10.2023 EP 23202843**

(71) Anmelder:
• **Fraunhofer-Gesellschaft zur Förderung der angewandten Forschung e.V.**
  **80686 München (DE)**
• **Friedrich-Alexander-Universität Erlangen-Nürnberg**
  **91054 Erlangen (DE)**

(72) Erfinder:
• **GEHRING, Johannes**
  **91052 Erlangen (DE)**
• **SCHWANNINGER, Raffael**
  **90427 Nürnberg (DE)**
• **WUNDER, Bernd**
  **91058 Erlangen (DE)**

(74) Vertreter: **Zimmermann, Tankred Klaus et al Schoppe, Zimmermann, Stöckeler Zinkler, Schenk & Partner mbB Patentanwälte Radlkoferstrasse 2 81373 München (DE)**

(54) **ÜBERSTROM-BEGRENZUNGSEINHEIT-UND-DETEKTIONSEINHEIT UND VERFAHREN ZUM HERSTELLEN UND VERFAHREN ZUM BETREIBEN DERSELBEN**

(57)   Beschrieben ist eine Überstrom-Begrenzungseinheit-und-Detektionseinheit, umfassend: einen Ferritkern, welcher durch Anordnung mindestens eines Permanentmagneten hinsichtlich seiner magnetischen Leitfähigkeit in einen gesättigten Bereich gebracht ist, um eine magnetische Nichtleitfähigkeit des Ferritkerns zu bewirken, eine Netzspule, welche um einen Teil des Ferritkerns gewickelt ist und welche dazu ausgebildet ist, während eines Betriebes der Überstrom-Begrenzungseinheit-und-Detektionseinheit von einem elektrischen Netzstrom durchflossen zu werden, wobei der mindestens eine Permanentmagnet an dem Ferritkern derart angeordnet ist, dass ein von dem mindestens einen Permanentmagneten hervorgerufener magnetischer Fluss entgegen eines während des Betriebes der Überstrom-Begrenzungseinheit-und-Detektionseinheit von der Netzspule hervorgerufenen magnetischen Flusses verläuft, wobei ferner eine von der Netzspule galvanisch getrennte Detektionsspule um einen Teil des Ferritkerns gewickelt ist, welche dazu ausgebildet ist, während eines Störbetriebes der Überstrom-Begrenzungseinheit-und-Detektionseinheit durch Detektieren einer Detektionsspannung an der Detektionsspule einen Übergang aus dem gesättigten Bereich des Ferritkerns in einen ungesättigten Bereich des Ferritkerns zu erfassen, wobei die Überstrom-Begrenzungseinheit-und-Detektionseinheit dazu ausgebildet ist, mit Erfassen der Detektionsspannung einen Schutzschalter anzusteuern, um ein Abschalten des elektrischen Netzstromes durch die Netzspule zu bewirken. Außerdem sind ein Verfahren zum Herstellen und ein Verfahren zum Betreiben einer Überstrom-Begrenzungseinheit-und-Detektionseinheit beschrieben.

Fig. 1

EP 4 539 285 A1

**Beschreibung**

Die vorliegende Erfindung betrifft eine Überstrom-Begrenzungseinheit-und-Detektionseinheit, ein Verfahren zum Herstellen einer Überstrom-Begrenzungseinheit-und-Detektionseinheit und ein Verfahren zum Betreiben einer Überstrom-Begrenzungseinheit-und-Detektionseinheit.

Ein häufiges Problem bei der Auslegung der Schutztechnik in Gleichspannungsnetzen (DC-Netzen) sind die hohen Kurzschlussströme mit einer schnellen Anstiegsgeschwindigkeit aufgrund des kapazitiven Netzes. Um dabei den Komponentenschutz zu gewährleisten, ist ein schnelles Abschalten, bei empfindlichen Komponenten insbesondere mit elektronischen Schaltern, erforderlich. Dafür werden schnelle und robuste Detektionsverfahren benötigt. Gleichzeitig kann der Stromanstieg durch Induktivitäten begrenzt werden, wodurch der Schalter zwar bei geringeren Strömen abschalten kann, jedoch länger für das Schalten benötigt und aufgrund der zusätzlich induktiv gespeicherten Energie eine größere Energie umsetzen muss.

Ein ähnliches Problem ist auch bei Wechselspannungsnetzen bekannt.

Das Verhalten im Kurzschlussfall von DC-Netzen ist generell bekannt [1] [2]. Hierfür werden für eine optimale Sicherung insbesondere schnell schaltende elektronische Schalter entwickelt, wie sie beispielsweise in CN 112 311 366 A beschrieben sind. Dafür werden verschiedene direkte und indirekte Methoden zur Strommessung genutzt [3]. Insbesondere Verfahren ohne oder mit nur geringfügigem Eingriff sind dabei vorteilhaft, da invasive Messverfahren typischerweise zusätzliche Verluste einbringen. Nicht invasive Messungen haben jedoch üblicherweise das Problem einer großen Verzögerung aufgrund der erforderlichen Störimmunität.

Die Begrenzung der Anstiegsgeschwindigkeit von Kurzschlussströmen wird in Niederspannungsnetzen aufgrund der zusätzlichen Induktivität bei schnellen elektronischen Schaltern kaum angewendet. Im Hochspannungsbereich gibt es für solche Anwendungsfälle supraleitende Strombegrenzer [4], die jedoch aufgrund des enormen Aufwands für die Aufrechterhaltung der Supraleitung nicht auf Niederspannung anwendbar sind. Hierbei ist die Induktivität im Normalbetrieb sehr gering und erreicht erst bei hohen Fehlerströmen einen großen Wert und damit eine Strombegrenzung. Im Niederspannungsbereich würde sich hierbei eine Anwendung mit Permanentmagneten, die eine Vorsättigung des Kernmaterials bewirken, anbieten. Erste Konzepte hierzu sind bereits vorhanden (siehe [5] oder CN 113 872 170 A).

CN 113 872 170 A offenbart eine Gleichstrom-Fehlerstrombegrenzertechnologie mit magnetischem Sättigungseisenkern, insbesondere einen Gleichstrom-Fehlerstrombegrenzer mit magnetischem Sättigungseisenkern, der in der Lage ist, eine sekundäre aktive Strombegrenzung durchzuführen, und ein Strombegrenzungsverfahren. Der Strombegrenzer umfasst Folgendes: ein Eisenkern, zwei Gleichstrom-Hauptzweigwicklungen, zwei Koppelzweigwicklungen, ein Koppelzweig und zwei Permanentmagnete. Der Eisenkern ist quadratisch und besteht aus einer linken Eisenkernsäule, einer rechten Eisenkernsäule, einem oberen Querjoch und einem unteren Querjoch. Das obere Querjoch und das untere Querjoch befinden sich am oberen Ende und am unteren Ende und die Permanentmagnete sind jeweils in der Mitte des oberen Querjochs und des unteren Querjochs eingebettet. Die beiden Gleichstrom-Hauptzweigwicklungen sind auf die linke bzw. rechte Eisenkernsäule gewickelt und in Reihe mit einem Gleichstromnetz verbunden, und die beiden Kopplungszweigwicklungen sind auf die Außenseiten der beiden Gleichstromzweige gewickelt. Die Hauptzweigwicklungen sind eng gekoppelt und mit dem Kopplungszweig verbunden; und der Kopplungszweig wird durch eine Parallelschaltung von n Untermodulen gebildet. Die zweite Wicklung in CN 113 872 170 A wird zur aktiven Begrenzung des Stromes verwendet. In CN 113 872 170 A wird Energie aus dem Netz in die Sekundärspule übertragen und in der Schaltung dort gespeichert bzw. in Wärme umgesetzt.

Konzepte, die Detektion und Strombegrenzung kombinieren, sind nur durch zusätzliche Beschaltungsblöcke möglich [5].

Eine Aufgabe der vorliegenden Erfindung ist es daher, eine verbesserte Überstrom-Begrenzungseinheit-und-Detektionseinheit und ein entsprechendes Herstellungsverfahren sowie einen Verfahren zum Betreiben der Überstrom-Begrenzungseinheit-und-Detektionseinheit bereitzustellen. Insbesondere ist es eine Aufgabe der vorliegenden Erfindung, eine Überstrom-Begrenzungseinheit-und-Detektionseinheit bereitzustellen, bei der mittels nicht-invasiver Messung ein Störfall in situ, d.h. ohne Zeitverzögerung, erfasst werden kann.

Diese Aufgabe wird gelöst durch eine Überstrom-Begrenzungseinheit-und-Detektionseinheit nach Patentanspruch 1, ein Verfahren zum Herstellen einer Überstrom-Begrenzungseinheit-und-Detektionseinheit nach Patentanspruch 8 und ein Verfahren zum Betreiben einer Überstrom-Begrenzungseinheit-und-Detektionseinheit 9.

Vorschlagsgemäß umfasst die Überstrom-Begrenzungseinheit-und-Detektionseinheit einen Ferritkern, welcher durch Anordnung mindestens eines Permanentmagneten hinsichtlich seiner magnetischen Leitfähigkeit in einen gesättigten Bereich gebracht ist, um eine magnetische Nichtleitfähigkeit des Ferritkerns zu bewirken, eine Netzspule, welche um einen Teil des Ferritkerns gewickelt ist und welche dazu ausgebildet ist, während eines Betriebes der Überstrom-Begrenzungseinheit-und-Detektionseinheit von einem elektrischen Netzstrom $I_{Netz}$ durchflossen zu werden, wobei der mindestens eine Permanentmagnet an dem Ferritkern derart angeordnet ist, dass ein von dem mindestens einen Permanentmagneten hervorgerufener magnetischer Fluss entgegen eines während des Betriebes der Überstrom-Begrenzungseinheit-und-Detektionseinheit von der Netzspule hervorgerufenen magnetischen Flusses verläuft, wobei ferner eine von der Netzspule galvanisch getrennte Detektionsspule um einen Teil des Ferritkerns gewickelt ist, welche dazu ausgebildet ist, während eines Störbetriebes der Überstrom-Begrenzungseinheit-und-Detektionseinheit durch Detektieren einer Detektionsspannung an der Detektionsspule einen Übergang aus dem gesättigten Bereich des Ferritkerns in einen ungesättigten Bereich des Ferritkerns zu erfassen, wobei die Überstrom-Begrenzungseinheit-und-Detektionseinheit dazu ausgebildet ist, mit Erfassen der Detektionsspannung einen Schutzschalter anzusteuern, um ein Abschalten des elektrischen Netzstromes $I_{Netz}$ durch die Netzspule zu bewirken. Typische Permanentmagnete können Eisenkerne nicht sättigen, Ferritkerne jedoch schon. Vorliegend wird der Übergang von einem gesättigten Bereich des Ferritkerns in einen ungesättigten Bereich des Ferritkerns detektiert.

Die vorliegende Erfindung beschreibt einen Aufbau einer Überstrom-Begrenzungseinheit-und-Detektionseinheit, mit der ein Stromanstieg begrenzt werden kann und gleichzeitig, insbesondere automatisch, eine nicht-invasive Detektion des Überstromes möglich ist. Dabei wird der Ferritkern durch einen oder mehrere Permanentmagnete in Sättigung gebracht, d.h. hinsichtlich seiner magnetischen Leitfähigkeit in einen gesättigten Bereich gebracht. Der Permanentmagnet ist dabei so ausgerichtet, dass der von dem Permanentmagneten hervorgerufene magnetische Fluss entgegen dem vom zu begrenzenden Strom im Netz $I_{Netz}$ erzeugten verläuft. Der Permanentmagnet kann dabei bevorzugt so ausgelegt sein, dass der Ferritkern bei Nennstrom noch in Sättigung ist. Wird die Stromstärke drastisch erhöht, wie es in einem Störbetrieb wie beispielsweise in einem Fehlerfall passiert, sinkt die Flussdichte unter die Sättigungsgrenze und im Netz ist damit eine starke Änderung der Induktivität feststellbar bzw. messbar. Durch Detektionswindungen der Detektionsspule am Ferritkern kann der Übergang aus dem gesättigten Bereich heraus festgestellt werden. Die sich beim Übergang aus dem gesättigten Bereich deutlich vergrößernde Kopplung der Netzspule mit der Detektionsspule mittels des Ferritkerns ist abhängig von der durch die Induktivität beeinflusste Stromsteilheit, wodurch eine Spannung an der Detektionsspule messbar wird. Mittels der Detektionsspule kann in situ und ohne Zeitverzögerung durch Messen der Detektionsspannung ein Störbetrieb, wie beispielsweise ein Fehlerfall, erfasst werden.

Der Begriff "galvanisch getrennt" ist vorliegend derart zu verstehen, dass die Netzspule und die Detektionsspule keine direkte elektrisch leitende Verbindung miteinander aufweisen. Die Netzspule ist mit dem Netz verbunden, während die Detektionsspule zum Netz isoliert ist. Die Detektionsspule ist im Fachterminus "galvanisch getrennt" von der Netzspule.

Das Merkmal wonach "die Überstrom-Begrenzungseinheit-und-Detektionseinheit dazu ausgebildet ist, mit Erfassen der Detektionsspannung einen Schutzschalter anzusteuern, um ein Abschalten des elektrischen Netzstromes $I_{Netz}$ durch die Netzspule zu bewirken" ist vorliegend derart zu verstehen, dass zeitgleich mit dem, insbesondere nicht-invasiven, Messen der Detektionsspannung der Schutzschalter unmittelbar, d.h. automatisch, angesteuert wird. Das Ansteuern des Schutzschalters erfolgt ab Erfassen der Detektionsspannung in wenigen Nanosekunden. Wann der Schutzschalter ansteuert, hängt von einer Ausbreitungsverzögerung (engl.:propagation delay) einer externen Schaltung ab, in welcher der Schutzschalter bzw. die Überstrom-Begrenzungseinheit-und-Detektionseinheit verbaut ist.

Ein weiterer Aspekt der vorliegenden Erfindung betrifft ein Verfahren zum Herstellen einer Überstrom-Begrenzungseinheit-und-Detektionseinheit, umfassend ein Bereitstellen eines Ferritkerns, ein Anordnen mindestens eines Permanentmagneten an dem Ferritkern, um zu bewirken, dass der Ferritkern hinsichtlich seiner magnetischen Leitfähigkeit in einen gesättigten Bereich gebracht wird, um eine magnetische Nichtleitfähigkeit des Ferritkerns zu bewirken, ein Anordnen einer Netzspule um einen Teil des Ferritkerns, wobei die Netzspule ausgebildet ist, während eines Betriebes der Überstrom-Begrenzungseinheit-und-Detektionseinheit von einem elektrischen Netzstrom $I_{Netz}$ durchflossen zu werden, ein Anordnen des mindestens einen Permanentmagneten an dem Ferritkern so, dass ein von dem mindestens einen Permanentmagneten hervorgerufener magnetischer Fluss entgegen eines während des Störbetriebes der Überstrom-Begrenzungseinheit-und-Detektionseinheit von der Netzspule hervorgerufenen magnetischen Flusses verläuft, Anordnen einer Detektionsspule um einen Teil des Ferritkerns, um zu bewirken, dass während des Störbetriebes der Überstrom-Begrenzungseinheit-und-Detektionseinheit durch Detektieren einer Detektionsspannung an der Detektionsspule ein Übergang aus dem gesättigten Bereich des Ferritkerns in einen ungesättigten Bereich des Ferritkerns erfasst wird, wobei das Anordnen der Detektionsspule galvanisch getrennt zu der Netzspule erfolgt, und ein Koppeln eines Schutzschalters mit der Überstrom-Begrenzungseinheit-und-Detektionseinheit, wobei die Überstrom-Begrenzungseinheit-und-Detektionseinheit dazu ausgebildet ist, mit Erfassen der Detektionsspannung den Schutzschalter anzusteuern, um ein Abschalten des elektrischen Netzstromes $I_{Netz}$ durch die Netzspule zu bewirken. Das vorgeschlagene Verfahren zum Herstellen einer Überstrom-Begrenzungseinheit-und-Detektionseinheit beschreibt ein Verfahren zum Herstellen der soeben bereits beschriebenen Überstrom-Begrenzungseinheit-und-Detektionseinheit.

Ein weiterer Aspekt der vorliegenden Erfindung betrifft ein Verfahren zum Betreiben einer Überstrom-Begrenzungseinheit-und-Detektionseinheit, wie hierin beschrieben. Das Verfahren umfasst ein Betreiben der Netzspule während eines Betriebes der Überstrom-Begrenzungseinheit-und-Detektionseinheit mit elektrischem Strom; ein Detektieren einer Detektionsspannung an der Detektionsspule während eines Störbetriebes und anschließendes Ansteuern eines Schutzschalters durch die Überstrom-Begrenzungseinheit-und-Detektionseinheit, sobald die Detektionsspannung erfasst worden ist, um ein Abschalten des elektrischen Netzstromes $I_{Netz}$ durch die Netzspule zu bewirken. Der Betrieb umfasst ein Betreiben der Überstrom-Begrenzungseinheit-und-Detektionseinheit unter normalen, typischen Bedingungen. Während des Betriebes wird keine Detektionsspannung detektiert. Erst bei Auftreten des Störbetriebe wird von der Detektionsspule eine Detektionsspannung gemessen. Der Störbetrieb zeigt somit einen Fehlerfall an.

Es versteht sich, dass einzelne Aspekte, welche in Bezug auf die Überstrom-Begrenzungseinheit-und-Detektionseinheit 100 beschrieben sind, auch als Verfahrensschritt zum Betreiben oder zur Herstellung der Überstrom-Begrenzungseinheit-und-Detektionseinheit umgesetzt werden können. Um Redundanzen zu vermeiden, werden die Vorteile und das Verständnis einzelner Begriffe, wie sie im Hinblick auf die Überstrom-Begrenzungseinheit-und-Detektionseinheit beschrieben worden sind, nicht wiederholt. Es versteht sich, dass die Einzelheiten, wie zu der Überstrom-Begrenzungseinheit-und-Detektionseinheit beschrieben, auch auf die Verfahren übertragbar sind. Mögliche Einzelheiten der Überstrom-Begrenzungseinheit-und-Detektionseinheit und der Verfahren werden in der nachfolgenden Bildbeschreibung erörtert. Weitere Details werden im Rahmen der nachfolgenden Bildbeschreibung erörtert.

Bevorzugte Ausführungsbeispiele der vorliegenden Erfindung werden nachfolgend Bezug nehmend auf die beiliegenden Zeichnungen detailliert erläutert. Es zeigen:

Fig. 1 einen schematischen Aufbau der Überstrom-Begrenzungseinheit-und-Detektionseinheit;

Fig. 2 einen typischen Verlauf der Induktivität und der Detektionsspannung gegenüber dem angelegten Netzstrom;

Fig. 3 einen weiteren schematischen Aufbau der Überstrom-Begrenzungseinheit-und-Detektionseinheit;

Fig. 4 einen weiteren schematischen Aufbau der Überstrom-Begrenzungseinheit-und-Detektionseinheit;

Fig. 5 ein Ablaufschema eines Verfahrens zum Herstellen einer Überstrom-Begrenzungseinheit-und-Detektionseinheit;

Fig. 6 ein Ablaufschema eines Verfahrens zum Betreiben einer Überstrom-Begrenzungseinheit-und-Detektionseinheit, und

Fig. 7 einen weiteren verbesserten schematischen Aufbau der Überstrom-Begrenzungseinheit-und-Detektionseinheit.

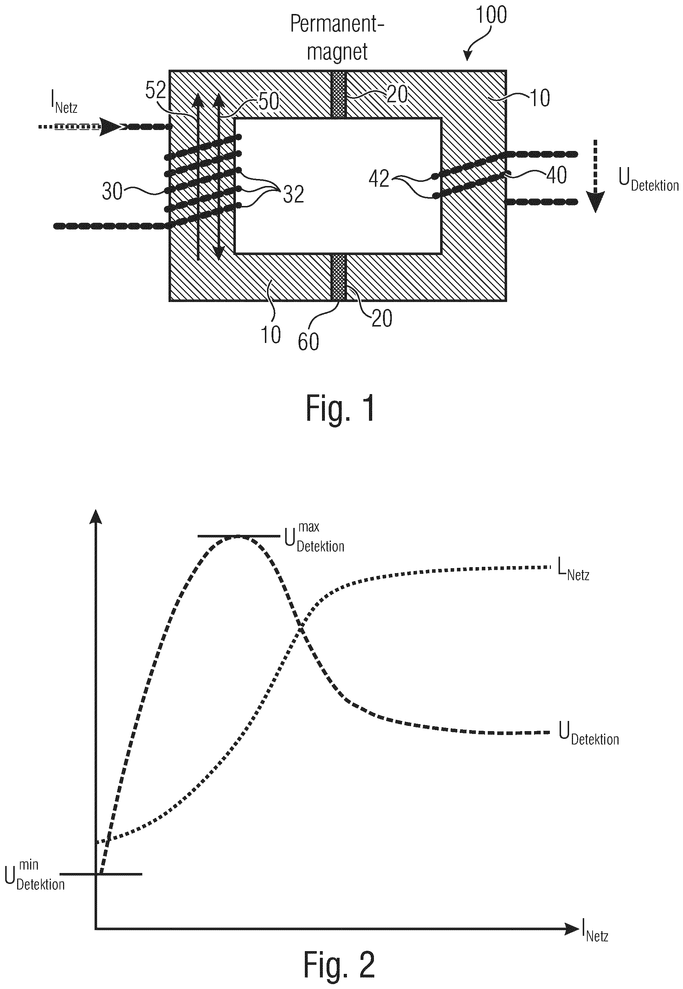

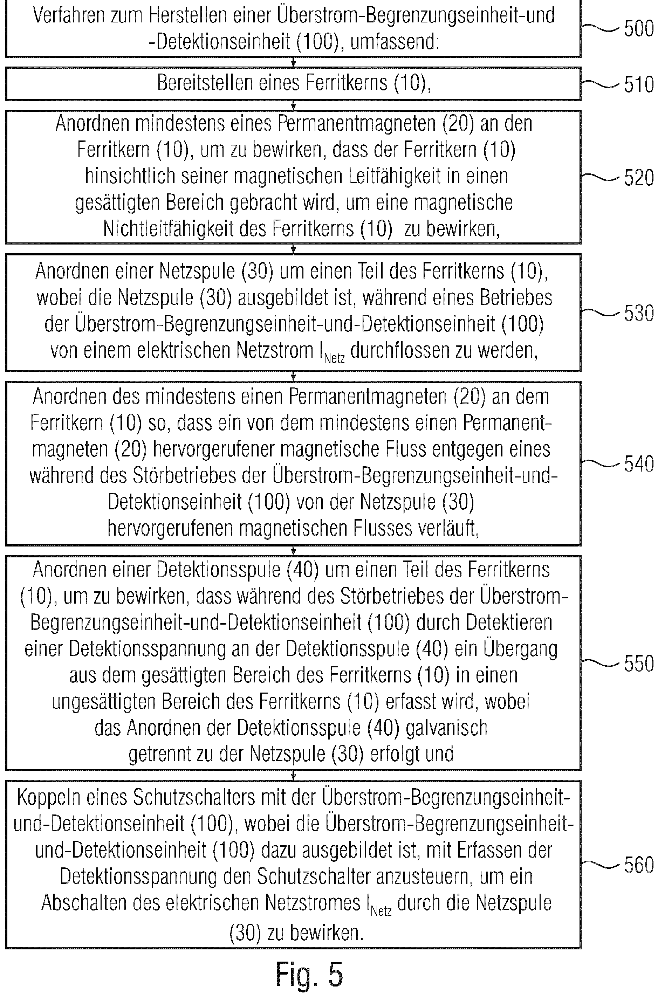

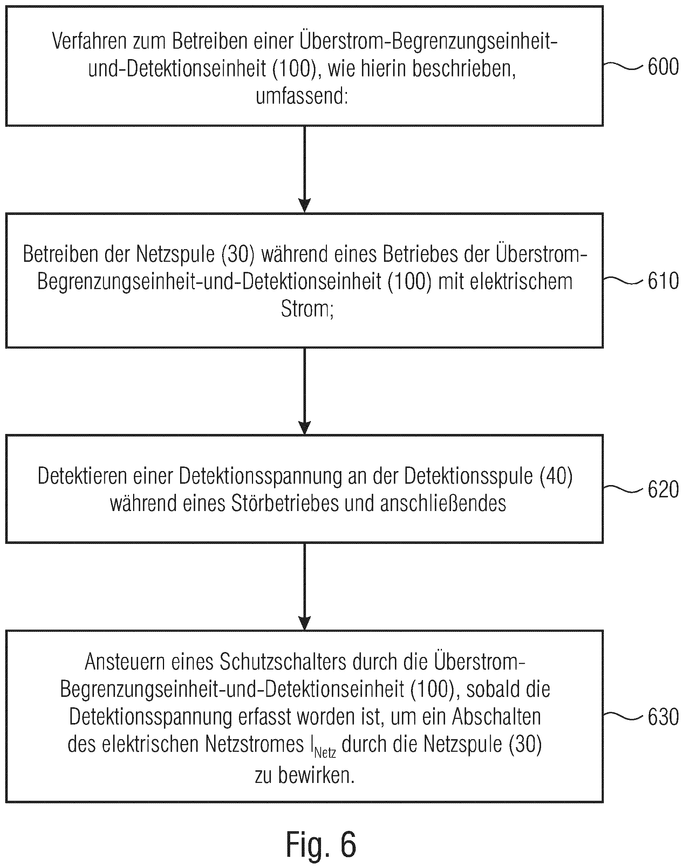

Einzelne Aspekte der hierin beschriebenen Erfindung sind nachfolgend in den Figuren 1 bis 6 beschrieben. In der vorliegenden Anmeldung betreffen gleiche Bezugszeichen gleiche oder gleichwirkende Elemente, wobei nicht alle Bezugszeichen in allen Zeichnungen, sofern sie sich wiederholen, erneut dargelegt sein müssen. Figs. 1, 3 und 4 zeigen verschiedene Ausführungsbeispiele der vorgeschlagenen Überstrom-Begrenzungseinheit-und-Detektionseinheit 100. Fig. 2 zeigt einen typischen Verlauf einer gemessenen Induktivität $L_{Netz}$ und einer gemessenen Detektionsspannung $U_{Detektion}$ der vorgeschlagenen Überstrom-Begrenzungseinheit-und-Detektionseinheit 100. Fig. 5 zeigt ein Ablaufschema eines Verfahrens zum Herstellen einer Überstrom-Begrenzungseinheit-und-Detektionseinheit 100. Fig. 6 zeigt ein Ablaufschema eines Verfahrens zum Betreiben einer Überstrom-Begrenzungseinheit-und-Detektionseinheit 100.

Fig. 1 zeigt einen schematischen Aufbau der vorgeschlagenen Überstrom-Begrenzungseinheit-und-Detektionseinheit 100. Die Überstrom-Begrenzungseinheit-und-Detektionseinheit 100 umfasst einen Ferritkern 10, welcher durch Anordnung mindestens eines Permanentmagneten 20 hinsichtlich seiner magnetischen Leitfähigkeit in einen gesättigten Bereich gebracht ist, um eine magnetische Nichtleitfähigkeit des Ferritkerns 10 zu bewirken. Außerdem umfasst die Überstrom-Begrenzungseinheit-und-Detektionseinheit 100 eine Netzspule 30, welche um einen Teil des Ferritkerns 10 gewickelt ist und welche dazu ausgebildet ist, während eines Betriebes der Überstrom-Begrenzungseinheit-und-Detektionseinheit 100 von einem elektrischen Netzstrom $I_{Netz}$ durchflossen zu werden. Der mindestens eine Permanentmagnet 20 ist derart an dem Ferritkern angeordnet, dass ein von dem mindestens einen Permanentmagneten 20 hervorgerufener magnetischer Fluss entgegen eines während des Betriebes der Überstrom-Begrenzungseinheit-und-Detektionseinheit 100 von der Netzspule 30 hervorgerufenen magnetischen Flusses verläuft. Ferner ist eine von der Netzspule 30 galvanisch getrennte Detektionsspule 40 um einen Teil des Ferritkerns 10 gewickelt, welche dazu ausgebildet ist, während eines Störbetriebes der Überstrom-Begrenzungseinheit-und-Detektionseinheit 100 durch Detektieren einer Detektionsspannung an der Detektionsspule 40 einen Übergang aus dem gesättigten Bereich des Ferritkerns 10 in einen ungesättigten Bereich des Ferritkerns 10 zu erfassen. Die Überstrom-Begrenzungseinheit-und-Detektionseinheit 100 ist dazu ausgebildet, mit Erfassen der Detektionsspannung einen Schutzschalter anzusteuern, um ein Abschalten des elektrischen Netzstromes $I_{Netz}$ durch die Netzspule 30 zu bewirken.

Mit der beschriebenen Überstrom-Begrenzungseinheit-und-Detektionseinheit 100 kann ein Stromanstieg begrenzt werden und gleichzeitig, insbesondere automatisch, kann eine nicht-invasive Detektion des Überstromes erfolgen. Dabei wird der Ferritkern 10 durch einen oder mehrere Permanentmagnete 20 in Sättigung gebracht, d.h. hinsichtlich seiner magnetischen Leitfähigkeit in einen gesättigten Bereich gebracht. Der Permanentmagnet 20 ist dabei so ausgerichtet, dass der von dem Permanentmagneten 20 hervorgerufene magnetische Fluss 50 entgegen dem vom zu begrenzenden Strom im Netz $I_{Netz}$ erzeugten magnetischen Fluss 52 verläuft. Wird die Stromstärke drastisch erhöht, wie es in einem Störbetrieb wie beispielsweise in einem Fehlerfall passiert, sinkt die Flussdichte unter die Sättigungsgrenze und im Netz ist damit eine starke Änderung der Induktivität $L_{Netz}$ feststellbar bzw. messbar. Fig. 2 zeigt einen typischen Verlauf der Induktivität $L_{Netz}$ im Spannungsnetz und der gemessenen Detektionsspannung $U_{Detektion}$ gegenüber eines Netzstromes $I_{Netz}$ während des Betriebes, bei dem der Störbetrieb detektiert wird. Durch Detektionswindungen 42 der Detektionsspule am Ferritkern 10 kann der Übergang aus dem gesättigten Bereich heraus festgestellt werden. Die sich damit deutlich vergrößernde Kopplung mittels des Ferritkerns 10 der beiden Spulen ist abhängig von der durch die Induktivität beeinflusste Stromsteilheit und eine Spannung an der Detektionsspule 40 wird messbar. Mittels der Detektionsspule 40 kann in situ und ohne Zeitverzögerung durch Messen der Detektionsspannung ein Störbetrieb, wie beispielsweise ein Fehlerfall, erfasst werden.

Der Begriff "galvanisch getrennt" ist vorliegend derart zu verstehen, dass die Netzspule und die Detektionsspule keine direkte elektrisch leitende Verbindung miteinander aufweisen. Die Netzspule ist mit dem Netz verbunden, während die Detektionsspule zum Netz isoliert ist. Die Detektionsspule ist im Fachterminus "galvanisch getrennt" von der Netzspule. Die Detektionsspule 40 und die Netzspule 30 sind lediglich über den Ferritkern 10 gekoppelt, so dass eine elektrische Leitfähigkeit über einer direkte Verbindung der Spulen 30, 40 untereinander nicht besteht.

Das Merkmal wonach "die Überstrom-Begrenzungseinheit-und-Detektionseinheit dazu ausgebildet ist, mit Erfassen der Detektionsspannung einen Schutzschalter anzusteuern, um ein Abschalten des elektrischen Netzstromes $I_{Netz}$ durch die Netzspule zu bewirken" ist vorliegend derart zu verstehen, dass zeitgleich, insbesondere innerhalb weniger Nanosekunden, mit dem, insbesondere nicht-invasiven, Messen der Detektionsspannung der Schutzschalter unmittelbar, d.h. automatisch, angesteuert wird. Das Ansteuern des Schutzschalters erfolgt ab Erfassen der Detektionsspannung in wenigen Nanosekunden. Wann der Schutzschalter ansteuert, hängt von einer Ausbreitungsverzögerung (engl.:propagation delay) der Schaltung ab, in welcher der Schutzschalter bzw. die Überstrom-Begrenzungseinheit-und-Detektionseinheit verbaut ist. Die Detektionseinheit der Überstrom-Begrenzungseinheit-und-Detektionseinheit 100 arbeitet nicht-invasiv, d.h. verlustfrei. Außerdem ermöglicht die Überstrom-Begrenzungseinheit-und-Detektionseinheit 100 ohne Zeitverzögerung den Netzstrom im Störbetrieb durch Ansteuern eines Schalters zu begrenzen oder abzuschalten. Mit anderen Worten, die detektierte Detektionsspannung $U_{Detektion}$ kann zur Auslösung eines vorgelagerten Schutzschalters verwendet werden.

Eine Messgrenze der Detektionseinheit ist bevorzugt so angesetzt, dass die Detektionseinheit ein Signal (in Abhängigkeit der erfassten Detektionsspannung $U_{Detektion}$) liefert, das der Schutzschalter als Auslösesignal nutzt. Das Erfassen der Detektionsspannung ist dabei die Operation, die auch das Auslösesignal bereitstellt. Der Schalter sollte in Abhängigkeit von der Auswertung im Schalter dann innerhalb von Nanosekunden auslösen können.

Die vorgeschlagene Überstrom-Begrenzungseinheit-und-Detektionseinheit 100 bedarf keines zusätzlichen Beschaltungsblocks, um den Störbetrieb zu erfassen, da der Störbetrieb dann als erfasst gilt, wenn durch die Detektionsspule 40 die Detektionsspannung $U_{Detektion}$ erfasst wird.

Fig. 2 zeigt einen typischen Verlauf der Induktivität $L_{Netz}$ im Spannungsnetz und der gemessenen Detektionsspannung $U_{Detektion}$ gegenüber eines Netzstromes $I_{Netz}$ während des Betriebes, in dem ein Störbetrieb detektiert wird. Der Fig. 2 ist zu entnehmen, dass mit steigender Erhöhung der Stromstärke (aufgetragen auf der x-Achse), wie es in einem Störbetrieb wie beispielsweise in einem Fehlerfall passiert, die magnetische Flussdichte 52 unter die Sättigungsgrenze der magnetischen Flussdichte 52 sinkt, wodurch im Netz eine starke Änderung der Induktivität $L_{Netz}$ feststellbar bzw. messbar ist. In Fig. 2 ist zu sehen, dass die gemessene Induktivität $L_{Netz}$ im Störfall stetig ansteigt, bis ein Plateau erreicht wird. Die gemessene Detektionsspannung $U_{Detektion}$ hingegen steigt zunächst stetig an, bis sie ein Maximum erreicht und nimmt dann wieder ab, bis auch die Detektionsspannung $U_{Detektion}$ ein Plateau erreicht. Sowohl die gemessene Detektionsspannung $U_{Detektion}$ als auch die gemessene Induktivität $L_{Netz}$ konvergieren mit steigendem Netzstrom $I_{Netz}$ gegen einen Grenzwert, welcher vorliegend jeweils als Plateau bezeichnet wird. Ferner ist der Fig. 2 zu entnehmen, dass die Überstrom-Begrenzungseinheit-und-Detektionseinheit 100 dazu ausgebildet ist eine minimale Detektionsspannung $U_{Detektion,\ min}$ zu erfassen, wobei die minimale Detektionsspannung $U_{Detektion,\ min}$ das Ansteuern des Schutzschalters auslöst. Anhand der Anzahl der Windungen 42 der Detektionsspule 40 kann der Betrag der Detektionsspannung eingestellt werden. Da die Detektionsspannung galvanisch getrennt ist, kann sie direkt zur Ansteuerung des Schutzschalters verwendet werden.

Bevorzugt ist der mindestens eine Permanentmagnet 20 derart ausgelegt, dass der Ferritkern 10 bei einem Nennstrom $I_{Nenn}$ eines Strom-Spannungs-Netzes, mit dem die Überstrom-Begrenzungseinheit-und-Detektionseinheit (100) verbindbar ist, in dem gesättigten Bereich ist. Die vorgeschlagene Überstrom-Begrenzungseinheit-und-Detektionseinheit 100 kann in Gleichspannungsnetzen oder auch in Wechselspannungsnetzen eingesetzt werden, insbesondere um weitere Komponenten in dem Strom-Spannungs-Netz im Falle eines Störbetriebes zu schützen.

Ein Verhältnis aus einer Anzahl an Windungen 32 der Netzspule 30 zu einer Anzahl an Windungen 42 der Detektionsspule 40 bestimmt eine maximale Detektionsspannung $U_{De\text{-}tektion,\ max}$. Mit anderen Worten, die Windungszahl der Begrenzungsseite (Anzahl an Windungen 32 der Netzspule 30) stellt die Induktivität ein und die Detektionsseite stellt die Detektionsspannung $U_{De\text{-}tektion}$ gemäß Induktionsgesetz aufgrund ändernder Flussdichte ein:

$$n = \frac{U_{Detektion,max}}{U_{Netz,max}},$$

wobei $n$ ein Verhältnis der Windungszahlen, $U_{Detektion,max}$ eine maximal zulässige Detektionsspannung und $U_{Netz,max}$ die maximale Netzspannung ist. Die Windungszahl der Netzspule 30 bestimmt den Stromanstieg im Störfall, wie beispielsweise einem Fehlerfall, und das Verhältnis $n$ der Windungszahlen bestimmt die maximale Detektionsspannung $U_{Detek\text{-}tion,max}$. Das Verhältnis $n$ der Windungszahlen muss so eingestellt werden, dass eine Auswerteschaltung das Signal noch bei minimaler Netzspannung erkennen kann. Typischerweise weist die Detektionsseite eine Spannung von 3-5 V auf. Die Netzseite kann entweder ein Schutzkleinspannungsnetz mit beispielsweise 24 V oder ein Niederspannungsnetz mit bis zu 1500 V sein oder gegebenenfalls sogar ein Mittelspannungsnetz im 10er kV Bereich. Das Verhältnis muss also auf die Anwendung angepasst werden. Eine minimale Detektionsspannung $U_{Detektion,min}$ für das Auslösen des Schalters wird in Abhängigkeit des Strom-Spannungs-Netzes gewählt und kann für jede Konfiguration des Strom-Spannungs-Netzes individuell festgelegt werden. Der Schalter, mit dem die Überstrom-Begrenzungseinheit-und-Detektionseinheit 100 gekoppelt ist, d.h. direkt verbunden oder über mindestens eine andere Komponente verbunden ist, ist dazu ausgebildet, dann zu schalten, wenn die minimale Detektionsspannung $U_{Detektion,min}$ erfasst, d.h. gemessen, wird.

Durch Anordnen der Netzspule 30 und der Detektionsspule 40 an voneinander beabstandeten Positionen des Ferritkerns 10 ist die Detektionsspannung von einer Netzspannung galvanisch getrennt. In Fig. 1 sind die Detektionsspule 40 und die Netzspule 30 beispielsweise gegenüberliegend auf zwei gegenüberliegenden U-Kernen angeordnet, wobei zwei Permanentmagnete 20 an den Bereichen angeordnet sind, an denen die zwei gegenüberliegende U-Kerne aneinander grenzen.

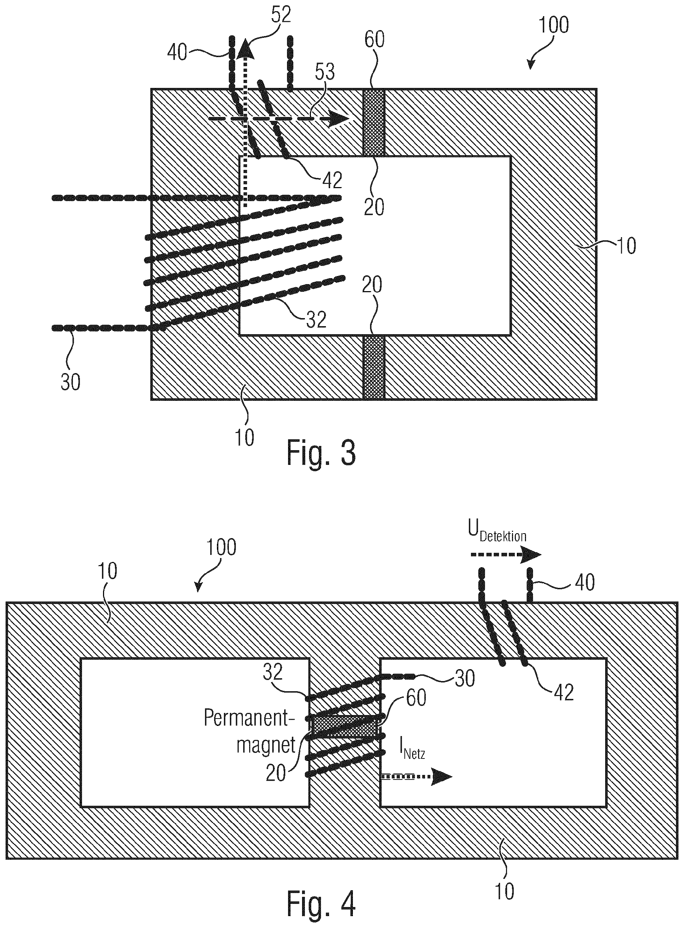

Bevorzugt sind die Netzspule 30 und die Detektionsspule 40 an zwei Positionen des Ferritkerns 10 angeordnet, so dass bei Anordnen von je einer Achse durch die Detektionsspule 40 und einer Achse durch die Netzspule 30 die beiden Achsen einen Schnittwinkel aufweisen. Eine Anordnung der Spulen um 90° gedreht maximiert beispielsweise die Änderung der magnetischen Flussdichte in der Detektionswicklung, d.h. in den Windungen 42 der Detektionsspule 40, zwischen gesättigtem und nicht gesättigtem Bereich. Im gesättigten Bereich hingegen ist die Kopplung minimal. Eine um 90 gedrehte Anordnung. zwischen Detektionsspule 40 und Netzspule 30 ist beispielsweise in den Figs. 3 und 4 zu sehen. Um im Bereich der Sättigung eine möglichst geringe Kopplung der Windungen 42 der Detektionsspule 40 zu erreichen, kann die Lage der Detektionswicklung wie beispielsweise in Figs. 3 und 4 gezeigt angepasst werden.

Fig. 3 zeigt einen verbesserten Aufbau der Überstrom-Begrenzungseinheit-und-Detektionseinheit 100 mit zwei U-Ferritkernen 10 während eines Betriebes bzw. während eines Störbetriebes. Der Pfeil 52 zeigt den magnetischen Fluss bei gesättigtem Ferritkern 10 im (Normal-)Betrieb, der Pfeil 53 zeigt den magnetischen Fluss bei ungesättigtem Kernmaterial des Ferritkerns 10 während eines Störbetriebes an. Es ist ersichtlich, dass kaum magnetischer Fluss durch die Windungen 42 der Detektionsspule 40 fließt, wenn der Kern 10 gesättigt ist. Sobald der Kern 10 entsättigt, führt der Kern 10 den magnetischen Fluss (Pfeil 53), welcher dann die Windungen 42 der Detektionsspule 40 maximal durchströmt.

Fig. 4 zeigt einen weiteren verbesserten Aufbau der Überstrom-Begrenzungseinheit-und-Detektionseinheit 100 mit zwei E-Kernen, welche den Ferritkern 10 ausbilden. Für eine möglichst große Änderung der Induktivität bietet sich insbesondere ein Aufbau mit E-Kernen und kleinem Luftspalt 60 an, wie in Fig. 4 dargestellt ist. Klein bedeutet in diesem Zusammenhang, dass der Luftspalt 60 nicht größer als der Permanentmagnet 20 ist. Bevorzugt liegt der Luftspalt 60 im Bereich weniger mm.

Die Kopplung im gesättigten Zustand, wie bei einer Anordnung der Detektionsspule 40 und der Netzspule 30 wie in Fig. 1 gezeigt, ist deutlich größer als bei einer Anordnung der Detektionsspule 40 und der Netzspule, wie in Figs. 3 und 4 gezeigt ist. Die Kopplung ist in diesem Fall jedoch trotzdem gering im Vergleich zum ungesättigten Zustand des Ferritkerns 10.

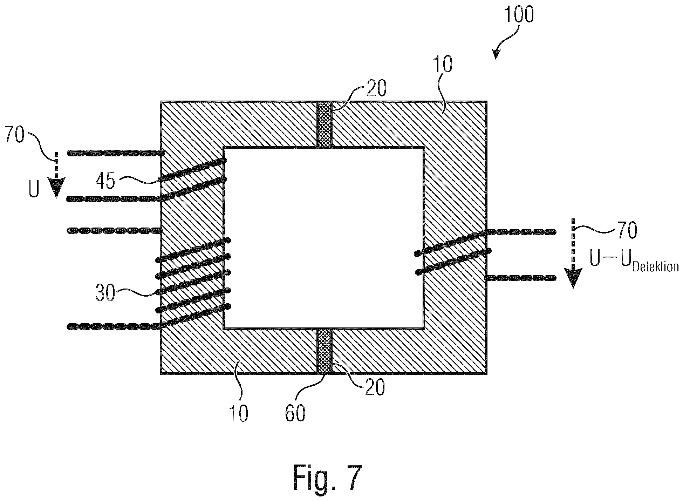

Fig. 7 zeigt einen weiteren verbesserten Aufbau der Überstrom-Begrenzungseinheit-und-Detektionseinheit 100 mit einer zusätzlichen Spule 45. Gemäß dem Ausführungsbeispiel aus Fig. 7 weist die Überstrom-Begrenzungseinheit-und-Detektionseinheit 100 eine zusätzliche Spule 45 auf, welche um einen Teil des Ferritkerns 10 gewickelt ist und welche zu der Netzspule 30 derart angeordnet ist, dass die zusätzliche Spule 45 und die Netzspule 30 eine von der Sättigung des Ferritkerns 10 unabhängige Kopplung aufweisen. Zur Verbesserung der Detektion wird die zusätzliche Spule (45) um den Ferritkern 10 gewickelt. Die zusätzliche Spule 45 ist so angeordnet, dass sie zu der Netzspule 30 eine gute Kopplung aufweist. Die Kopplung dieser beiden Spulen 30, 45 ist somit weitestgehend unabhängig von der Sättigung des Ferritkerns 10, wohingegen die Kopplung der Detektionswindung 40, d.h. der Detektionsspule 40, stark von dem Zustand des Ferritkerns 10 abhängt, d.h. ob der Ferritkern 10 im gesättigten oder ungesättigten Bereich ist. Jedenfalls kann an der Detektionsspule 40 und an der zusätzlichen Spule 45 jeweils die Spannung U gemessen werden (siehe Pfeile 70 in Fig. 7). Durch Auswertung der Differenz der beiden Spulenspannungen 70, können Einflüsse des Netzes auf die Detektion zum Großteil kompensiert werden, wie beispielsweise die Abhängigkeit der Detektionsspannung von der Netzspannung oder Induktivitäten im Netz.

Bevorzugt umfasst der Ferritkern 10 mindestens einen U-Kern und/oder mindestens einen E-Kern. Figs. 1 und 3 zeigen beispielsweise zwei U-Kerne und Fig. 4 zeigt beispielsweise zwei E-Kerne. Es könnten auch ein quaderförmiger Kern mit einem E- oder U-Kern zusammen verwendet werden. Die Kernbauform ist für die Funktion nicht weiter ausschlaggebend. Es gibt viele verschiedene Kernbauformen (RM-Kerne, ELP-Kerne, oder ETD-Kerne ), die in Anwendungen dann für das verfügbare Bauvolumen ausgewählt werden. Hierbei steht RM für "Rectangular Modulus" (deutsch: Rechteckmodul), EPL für "E Low Profile" (deutsch: E niedriges Profil, wobei E die Form des Kernes beschreibt) und ETD für "Economic Transformer Design" (deutsch: Wirtschaftliches Transformatorendesign). E- und U-Kerne sind die gebräuchlichsten Formen, möglich wären jedoch unterschiedlichste Formen, insbesondere ist auch eine individuell gefertigte Kernform für diese Form der Detektion optimal. Mit einer individuell gefertigten Kernform kann beispielsweise die Anordnung der Detektionswicklung 40 (Detektionsspule 40) zur Netzwicklung 30 (Netzspule 30) für eine minimale Flussdichte in der Detektionswicklung 40 bei gesättigtem Kern optimiert werden. Die vorgeschlagene Überstrom-Begrenzungseinheit-und-Detektionseinheit 100 kann mit allen bekannten Kernbauformen ausgebildet werden. Bevorzugt werden zwei Kernhälften verwendet, zwischen die die Permanentmagnete 20 angeordnet werden und irgendwo an einem der Ferritkerne 10 wird eine Detektionsspule 40 angebracht.

Der Ferritkern 10 kann einen Luftspalt 60 aufweisen, oder der Ferritkern 10 kann keinen Luftspalt 60 aufweisen. In den Figs. 1, 3 und 4 beispielsweise sind die gegenüberliegenden Ferritkerne 10 durch einen Luftspalt 60 voneinander getrennt, wobei über dem Luftspalt 60 die Permanentmagnete 20 angeordnet sind. Bei einer Anordnung ohne Luftspalt 60 wäre der mindestens eine Permanentmagnet 20 außerhalb des mindestens einen Ferritkerns 10 positioniert (nicht gezeigt).

Der mindestens eine Permanentmagnet 20 kann beispielsweise als ein einziger Permanentmagnet 20 mit einer Dicke von 1 mm oder als zwei Permanentmagnete 20 mit jeweils einer Dicke von 500 μm ausgebildet sein. Der Permanentmagnet 20 wird bevorzugt so ausgewählt, dass die Flussdichte im Ferritkern 10 zu der Auslegung der Überstrom-Begrenzungseinheit-und-Detektionseinheit 100 passt. Es können auch mehrere Permanentmagnete 20 als zwei verwendet werden, wobei die Anzahl an verwendeten Permanentmagneten dadurch begrenzt ist, dass der Magnet fertigungstechnisch ab einer Mindestdicke nicht dünner gebildet werden kann. Typische Dicken der Permanentmagnete 20 liegen zwischen 100 μm bis 1 mm. Es kann aber auch Anordnungen der Überstrom-Begrenzungseinheit-und-Detektionseinheit 100 mit mindestens einem Permanentmagneten 20 mit eine Dicke von 2mm oder größer geben. Wird der Ferritkern 10 bautechnisch größer ausgebildet, insbesondere wenn mehr elektrischer Strom durch den Ferritkern 10 fließen soll, dann wird auch eine Fläche des Luftspalts größer. Wenn hingegen der elektrische Strom kleiner werden soll, d.h. ein kleinerer Ferritkern 10 gewählt wird, dann wird auch der Magnet 20 kleiner ausgebildet. Mit anderen Worten die Größenmaße des mindestens einen Permanentmagneten 20 ist abhängig von den Größenmaßen der Ferritkerns 10 zu wählen.

Ein weiterer Aspekt der vorliegenden Erfindung betrifft ein Verfahren 500 zum Herstellen einer Überstrom-Begrenzungseinheit-und-Detektionseinheit 100. Das Verfahren 500 umfasst in Schritt 510 ein Bereitstellen eines Ferritkerns 10, in Schritt 520 ein Anordnen mindestens eines Permanentmagneten 20 an dem Ferritkern 10, um zu bewirken, dass der Ferritkern 10 hinsichtlich seiner magnetischen Leitfähigkeit in einen gesättigten Bereich gebracht wird, um eine magnetische Nichtleitfähigkeit des Ferritkerns 10 zu bewirken. In Schritt 530 umfasst das Verfahren 500 ein Anordnen einer Netzspule 30 um einen Teil des Ferritkerns 10, wobei die Netzspule 30 ausgebildet ist, während eines Betriebes der Überstrom-Begrenzungseinheit-und-Detektionseinheit 100 von einem elektrischen Netzstrom $I_{Netz}$ durchflossen zu werden. In Schritt 540 umfasst das Verfahren 500 ein Anordnen des mindestens einen Permanentmagneten 20 an dem Ferritkern 10 so, dass ein von dem mindestens einen Permanentmagneten 20 hervorgerufener magnetischer Fluss entgegen eines während des Betriebes der Überstrom-Begrenzungseinheit-und-Detektionseinheit 100 von der Netzspule 30 hervorgerufenen magnetischen Flusses verläuft. Die magnetischen Flüsse verlaufen also parallel zueinander und zueinander entgegen. In Schritt 550 umfasst das Verfahren 500 ein Anordnen einer Detektionsspule 40 um einen Teil des Ferritkerns 10, um zu bewirken, dass während eines Störbetriebes die Überstrom-Begrenzungseinheit-und-Detektionseinheit 100 durch Detektieren einer Detektionsspannung an der Detektionsspule 40 ein Übergang aus dem gesättigten Bereich des Ferritkerns 10 in einen ungesättigten Bereich des Ferritkerns 10 erfasst, wobei das Anordnen der Detektionsspule (40) galvanisch getrennt zu der Netzspule (30) erfolgt. In Schritt 560 umfasst das Verfahren 500 ein Koppeln eines Schutzschalters mit der Überstrom-Begrenzungseinheit-und-Detektionseinheit 100, wobei die Überstrom-Begrenzungseinheit-und-Detektionseinheit 100 dazu ausgebildet ist, mit Erfassen der Detektionsspannung den Schutzschalter anzusteuern, um ein Abschalten des elektrischen Netzstromes $I_{Netz}$ durch die Netzspule 30 zu bewirken. Die Schritte 520 bis 550 können beliebig untereinander vertauscht werden, solange eine Überstrom-Begrenzungseinheit-und-Detektionseinheit 100 wie beispielsweise in Figs. 1, 3 oder 4 dargestellt ist, resultiert. Das Verfahren 500 kann auch das Bereitstellen mehrerer Ferritkernhälften umfassen, wobei die Ferritkernhälften zusammen angeordnet den Ferritkern 10 ausbilden. Hierbei können die Schritte 520 bis 550 zunächst an den Ferritkernhälften ausgeführt werden, um anschließend den Schritt 510 auszuführen, indem die Ferritkernhälften gegenüberliegend angeordnet werden, wie dies in Figs. 1, 3 und 4 gezeigt ist.

Ein weiterer Aspekt der vorliegenden Erfindung betrifft ein Verfahren 600 zum Betreiben einer Überstrom-Begrenzungseinheit-und-Detektionseinheit 100, wie hierin beschrieben.

Das Verfahren 600 umfasst in einem Schritt 610 ein Betreiben der Netzspule 30 während eines Betriebes der Überstrom-Begrenzungseinheit-und-Detektionseinheit 100 mit elektrischem Strom. In einem Schritt 620 umfasst das Verfahren 600 ein Detektieren einer Detektionsspannung an der Detektionsspule 40 während eines Störbetriebes. In einem anschließenden Schritt 630 umfasst das Verfahren 600 ein Ansteuern eines Schutzschalters durch die Überstrom-Begrenzungseinheit-und-Detektionseinheit 100, sobald die Detektionsspannung erfasst worden ist, um ein Abschalten des elektrischen Netzstromes $I_{Netz}$ durch die Netzspule (30) zu bewirken. Zum Ansteuern des Schutzschalters kann die Überstrom-Begrenzungseinheit-und-Detektionseinheit 100 mit einer Steuerung gekoppelt oder mit einer Steuerung ausgebildet sein. Die Steuerung veranlasst mit Detektion der Detektionsspannung $U_{Detektion}$, dass ein Signal ausgegeben wird, welches bewirkt, dass der Schutzschalter schaltet, um ein Abschalten des Strom-Spannung-Netzes zu bewirken. Insbesondere wird ein Subnetz mit dem Nennstrom $I_{Netz}$, in dem der Fehler detektiert wird, abgeschaltet. Es können noch weitere Schaltvorgänge damit gekoppelt vorgenommen werden, um kritische Komponenten etc. zu trennen. Der Betrieb umfasst ein Betreiben der Überstrom-Begrenzungseinheit-und-Detektionseinheit unter normalen, typischen Bedingungen. Während des Betriebes wird keine Detektionsspannung detektiert. Erst bei Auftreten des Störbetriebs wird von der Detektionsspule eine Detektionsspannung gemessen. Der Störbetrieb zeigt somit einen Fehlerfall an.

Durch die hierin beschriebene Möglichkeit der Detektion mittels der hierin beschriebenen Überstrom-Begrenzungseinheit-und-Detektionseinheit 100 wird ein galvanisch getrenntes Auslösesignal hoher Amplitude bei einer definierten Stromstärke erreicht, womit ohne zusätzliche Zeitverzögerung direkt die Auslösung eines Schutzschalters angesteuert werden kann. Zudem ermöglicht die Begrenzung des Stromanstieges das Einstellen einer definierten maximalen Anstiegsgeschwindigkeit, was das Auslegen des Schalters vereinfacht.

Die Nutzung eines anderen Detektionsverfahrens würde zu höheren Verlusten oder längeren Verarbeitungszeiten bei gleicher Störimmunität führen. Diese hätten ferner nicht den Vorteil einer Stromanstiegsbegrenzung. Alternative Möglichkeiten zur Begrenzung des Stromanstieges sind möglich, jedoch verursacht dies als zusätzliches Einbauteil Zusatzkosten und Bauraum. Mit der vorliegenden Erfindung können also Kosten und Bauraum gespart werden.

Das technische Anwendungsgebiet der vorliegenden Erfindung sind elektronische Schalter in DC-Netzen im Niederspannungsbereich, wobei grundsätzlich auch eine Anwendung in AC-Netzen möglich ist.

Der hierin verwendete Begriff "dazu ausgebildet ist" bringt zum Ausdruck, dass die Überstrom-Begrenzungseinheit-und-Detektionseinheit 100 für den genannten Zweck oder die genannte Funktion objektiv geeignet sein muss. Damit richtet sich der Sachanspruch auf eine Vorrichtung, mit der die genannten Zwecke oder Funktionen realisiert werden. Die hierin gemachten Zweck- und Funktionsangaben definieren den Gegenstand des Patentanspruchs dahin, dass die Überstrom-Begrenzungseinheit-und-Detektionseinheit 100 neben der Erfüllung der weiteren räumlich-körperlichen Merkmale die Überstrom-Begrenzungseinheit-und-Detektionseinheit 100 auch so ausgebildet sein muss, dass die Überstrom-Begrenzungseinheit-und-Detektionseinheit 100 für den im Patentanspruch angegebenen Zweck verwendet oder die angegebene Funktion erfüllt wird.

Obwohl manche Aspekte im Zusammenhang mit einer Vorrichtung bzw. einem System beschrieben wurden, versteht es sich, dass diese Aspekte auch eine Beschreibung eines entsprechenden Verfahrens darstellen, sodass ein Block oder ein Bauelement einer Vorrichtung bzw. eines Systems auch als ein entsprechender Verfahrensschritt oder als ein Merkmal eines Verfahrensschrittes zu verstehen ist. Auf eine vollständige Darstellung der vorliegenden Erfindung in Form von Verfahrensschritten wird vorliegend aus Redundanzgründen abgesehen.

In der vorhergehenden detaillierten Beschreibung wurden teilweise verschiedene Merkmale in Beispielen zusammen gruppiert, um die Offenbarung zu rationalisieren. Diese Art der Offenbarung soll nicht als die Absicht interpretiert werden, dass die beanspruchten Beispiele mehr Merkmale aufweisen als ausdrücklich in jedem Anspruch angegeben sind. Vielmehr kann, wie die folgenden Ansprüche wiedergeben, der Gegenstand in weniger als allen Merkmalen eines einzelnen offenbarten Beispiels liegen. Folglich werden die folgenden Ansprüche hiermit in die detaillierte Beschreibung aufgenommen, wobei jeder Anspruch als ein eigenes separates Beispiel stehen kann. Während jeder Anspruch als ein eigenes separates Beispiel stehen kann, sei angemerkt, dass, obwohl sich abhängige Ansprüche in den Ansprüchen auf eine spezifische Kombination mit einem oder mehreren anderen Ansprüchen zurückbeziehen, andere Beispiele auch eine Kombination von abhängigen Ansprüchen mit dem Gegenstand jedes anderen abhängigen Anspruchs oder einer Kombination jedes Merkmals mit anderen abhängigen oder unabhängigen Ansprüchen umfassen.

Solche Kombinationen seien umfasst, es sei denn es ist ausgeführt, dass eine spezifische Kombination nicht beabsichtigt ist. Ferner ist beabsichtigt, dass auch eine Kombination von Merkmalen eines Anspruchs mit jedem anderen unabhängigen Anspruch umfasst ist, selbst wenn dieser Anspruch nicht direkt abhängig von dem unabhängigen Anspruch ist.

Literaturverzeichnis:

[1] R. Bleilevens und A. Moser, "Simplified Short Circuit Current Calculation for DC Distribution Grids based on a Superposition Approach using Approximated Current Courses," 2020 5th IEEE Workshop on the Electronic Grid (eGRID), 2020.

[2] D. Petropoulos, L. Mackay, L. Ramirez-Elizondo, M. Popov und P. Bauer, "Transient analysis of DC distribution grids," 2017 IEEE Second International Conference on DC Microgrids (ICDCM), 2017.

[3] R. Rodrigues, Y. Du, A. Antoniazzi und P. Cairoli, "A Review of Solid-State Circuit Breakers," IEEE Trans. Power Electron. (IEEE Transactions on Power Electronics), 2021

[4] Z. Lin, J. Jin, Q. Yin, Y. Liu, J. Xu und X. Zeng, "Study on Coordination of Resistive-Type Superconducting Fault Current Limiter and DC Circuit Breaker in HVDC system," 5th Asia Conference on Power and Electrical Engineering (ACPEE), 2020.

[5] A. Hosseinzadeh und H. Heydari, "A Fast Fault Detection Method for Protection of HVDC Transmission using Voltage of The PMFCL," 10th Iranian Conference on Renewable Energy & Distributed Generation (ICREDG), 2023.

**Patentansprüche**

1. Überstrom-Begrenzungseinheit-und-Detektionseinheit (100) umfassend:

> einen Ferritkern (10), welcher durch Anordnung mindestens eines Permanentmagneten (20) hinsichtlich seiner magnetischen Leitfähigkeit in einen gesättigten Bereich gebracht ist, um eine magnetische Nichtleitfähigkeit des Ferritkerns (10) zu bewirken,
> eine Netzspule (30), welche um einen Teil des Ferritkerns (10) gewickelt ist und welche dazu ausgebildet ist, während eines Betriebes der Überstrom-Begrenzungseinheit-und-Detektionseinheit (100) von einem elektrischen Netzstrom $I_{Netz}$ durchflossen zu werden,
wobei der mindestens eine Permanentmagnet (20) an dem Ferritkern (10) derart angeordnet ist, dass ein von dem mindestens einen Permanentmagneten (20) hervorgerufener magnetischer Fluss entgegen eines während des Betriebes der Überstrom-Begrenzungseinheit-und-Detektionseinheit (100) von der Netzspule (30) hervorgerufenen magnetischen Flusses verläuft, wobei ferner
eine von der Netzspule (30) galvanisch getrennte Detektionsspule (40) um einen Teil des Ferritkerns (10) gewickelt ist, welche dazu ausgebildet ist, während eines Störbetriebes der Überstrom-Begrenzungseinheit-und-Detektionseinheit (100) durch Detektieren einer Detektionsspannung an der Detektionsspule (40) einen Übergang aus dem gesättigten Bereich des Ferritkerns (10) in einen ungesättigten Bereich des Ferritkerns (10) zu erfassen, wobei die Überstrom-Begrenzungseinheit-und-Detektionseinheit (100) dazu ausgebildet ist, mit Erfassen der Detektionsspannung einen Schutzschalter anzusteuern, um ein Abschalten des elektrischen Netzstromes $I_{Netz}$ durch die Netzspule (30) zu bewirken.

2. Überstrom-Begrenzungseinheit-und-Detektionseinheit (100) nach Anspruch 1, wobei der mindestens eine Permanentmagnet (20) derart ausgelegt ist, dass der Ferritkern (10) bei einem Nennstrom $I_{Nenn}$ eines Strom-Spannungs-Netzes, mit dem die Überstrom-Begrenzungseinheit-und-Detektionseinheit (100) verbindbar ist, in dem gesättigten Bereich ist.

3. Überstrom-Begrenzungseinheit-und-Detektionseinheit (100) nach Anspruch 1 oder 2, wobei ein Verhältnis aus einer Anzahl an Windungen der Netzspule (30) zu einer Anzahl an Windungen der Detektionsspule (40) eine maximale Detektionsspannung bestimmt.

4. Überstrom-Begrenzungseinheit-und-Detektionseinheit (100) nach einem der vorherigen Ansprüche, wobei durch Anordnen der Netzspule und der Detektionsspule an voneinander beabstandeten Positionen des Ferritkerns die Detektionsspannung von einer Netzspannung galvanisch getrennt ist.

5. Überstrom-Begrenzungseinheit-und-Detektionseinheit (100) nach einem der vorherigen Ansprüche, wobei die Netzspule und die Detektionsspule an zwei Positionen des Ferritkerns angeordnet sind, so dass bei Anordnen von je einer Achse durch die Detektionsspule und einer Achse durch die Netzspule die beiden Achsen einen Schnittwinkel aufweisen.

6. Überstrom-Begrenzungseinheit-und-Detektionseinheit (100) nach einem der vorherigen Ansprüche, wobei eine zusätzliche Spule (45) um einen Teil des Ferritkerns (10) gewickelt ist, welche zu der Netzspule (30) derart angeordnet ist, dass die zusätzliche Spule (45) und die Netzspule (39) eine von der Sättigung des Ferritkerns (10) unabhängige Kopplung aufweisen.

7. Überstrom-Begrenzungseinheit-und-Detektionseinheit (100) nach einem der vorherigen Ansprüche, wobei der Ferritkern (10) mindestens einen U-Kern und/oder mindestens einen E-Kern umfasst

8. Überstrom-Begrenzungseinheit-und-Detektionseinheit (100) nach einem der vorherigen Ansprüche, wobei der der Ferritkern (10) einen Luftspalt aufweist, oder wobei der Ferritkern (10) keinen Luftspalt aufweist.

9. Verfahren zum Herstellen einer Überstrom-Begrenzungseinheit-und-Detektionseinheit (100), umfassend:

> Bereitstellen eines Ferritkerns (10),
> Anordnen mindestens eines Permanentmagneten (20) an den Ferritkern (10), um zu bewirken, dass der Ferritkern (10) hinsichtlich seiner magnetischen Leitfähigkeit in einen gesättigten Bereich gebracht wird, um eine magnetische Nichtleitfähigkeit des Ferritkerns (10) zu bewirken,
> Anordnen einer Netzspule (30) um einen Teil des Ferritkerns (10), wobei die Netzspule (30) ausgebildet ist, während eines Betriebes der Überstrom-Begrenzungseinheit-und-Detektionseinheit (100) von einem elektrischen Netzstrom $I_{Netz}$ durchflossen zu werden,
> Anordnen des mindestens einen Permanentmagneten (20) an dem Ferritkern (10) so, dass ein von dem mindestens einen Permanentmagneten (20) hervorgerufene magnetische Fluss entgegen eines während des Störbetriebes der Überstrom-Begrenzungseinheit-und-Detektionseinheit (100) von der Netzspule (30) hervorgerufenen magnetischen Flusses verläuft,
> Anordnen einer Detektionsspule (40) um einen Teil des Ferritkerns (10), um zu bewirken, dass während des Störbetriebes der Überstrom-Begrenzungseinheit-und-Detektionseinheit (100) durch Detektieren einer Detektionsspannung an der Detektionsspule (40) ein Übergang aus dem gesättigten Bereich des Ferritkerns (10) in einen ungesättigten Bereich des Ferritkerns (10) erfasst wird, wobei das Anordnen der Detektionsspule (40) galvanisch getrennt zu der Netzspule (30) erfolgt, und
Koppeln eines Schutzschalters mit der Überstrom-Begrenzungseinheit-und-Detektionseinheit (100) wobei die Überstrom-Begrenzungseinheit-und-Detektionseinheit (100) dazu ausgebildet ist, mit Erfassen der Detektionsspannung den Schutzschalter anzusteuern, um ein Abschalten des elektrischen Netzstromes $I_{Netz}$ durch die Netzspule (30) zu bewirken.

10. Verfahren zum Betreiben einer Überstrom-Begrenzungseinheit-und-Detektionseinheit (100) nach einem der Ansprüche 1 bis 8, umfassend:

> Betreiben der Netzspule (30) während eines Betriebes der Überstrom-Begrenzungseinheit-und-Detektionseinheit (100) mit elektrischem Strom;
> Detektieren einer Detektionsspannung an der Detektionsspule (40) während eines Störbetriebes und anschließendes
> Ansteuern eines Schutzschalters durch die Überstrom-Begrenzungseinheit-und-Detektionseinheit (100), sobald die Detektionsspannung erfasst worden ist, um ein Abschalten des elektrischen Netzstromes $I_{Netz}$ durch die Netzspule (30) zu bewirken.

Fig. 1

Fig. 2

Fig. 3

Fig. 4

Verfahren zum Herstellen einer Überstrom-Begrenzungseinheit-und
-Detektionseinheit (100), umfassend: — 500

Bereitstellen eines Ferritkerns (10), — 510

Anordnen mindestens eines Permanentmagneten (20) an den
Ferritkern (10), um zu bewirken, dass der Ferritkern (10)
hinsichtlich seiner magnetischen Leitfähigkeit in einen
gesättigten Bereich gebracht wird, um eine magnetische
Nichtleitfähigkeit des Ferritkerns (10) zu bewirken, — 520

Anordnen einer Netzspule (30) um einen Teil des Ferritkerns (10),
wobei die Netzspule (30) ausgebildet ist, während eines Betriebes
der Überstrom-Begrenzungseinheit-und-Detektionseinheit (100)
von einem elektrischen Netzstrom $I_{Netz}$ durchflossen zu werden, — 530

Anordnen des mindestens einen Permanentmagneten (20) an dem
Ferritkern (10) so, dass ein von dem mindestens einen Permanentmagneten (20) hervorgerufener magnetische Fluss entgegen eines
während des Störbetriebes der Überstrom-Begrenzungseinheit-und-
Detektionseinheit (100) von der Netzspule (30)
hervorgerufenen magnetischen Flusses verläuft, — 540

Anordnen einer Detektionsspule (40) um einen Teil des Ferritkerns
(10), um zu bewirken, dass während des Störbetriebes der Überstrom-
Begrenzungseinheit-und-Detektionseinheit (100) durch Detektieren
einer Detektionsspannung an der Detektionsspule (40) ein Übergang
aus dem gesättigten Bereich des Ferritkerns (10) in einen
ungesättigten Bereich des Ferritkerns (10) erfasst wird, wobei
das Anordnen der Detektionsspule (40) galvanisch
getrennt zu der Netzspule (30) erfolgt und — 550

Koppeln eines Schutzschalters mit der Überstrom-Begrenzungseinheit-
und-Detektionseinheit (100), wobei die Überstrom-Begrenzungseinheit-
und-Detektionseinheit (100) dazu ausgebildet ist, mit Erfassen der
Detektionsspannung den Schutzschalter anzusteuern, um ein
Abschalten des elektrischen Netzstromes $I_{Netz}$ durch die Netzspule
(30) zu bewirken. — 560

Fig. 5

Verfahren zum Betreiben einer Überstrom-Begrenzungseinheit-und-Detektionseinheit (100), wie hierin beschrieben, umfassend:  — 600

Betreiben der Netzspule (30) während eines Betriebes der Überstrom-Begrenzungseinheit-und-Detektionseinheit (100) mit elektrischem Strom;  — 610

Detektieren einer Detektionsspannung an der Detektionsspule (40) während eines Störbetriebes und anschließendes  — 620

Ansteuern eines Schutzschalters durch die Überstrom-Begrenzungseinheit-und-Detektionseinheit (100), sobald die Detektionsspannung erfasst worden ist, um ein Abschalten des elektrischen Netzstromes $I_{Netz}$ durch die Netzspule (30) zu bewirken.  — 630

Fig. 6

Fig. 7

Europäisches Patentamt
European Patent Office
Office européen des brevets

# EUROPÄISCHER RECHERCHENBERICHT

**Nummer der Anmeldung**

EP 24 20 5491

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JP 2017 131032 A (NTN TOYO BEARING CO LTD) 27. Juli 2017 (2017-07-27) | 1-5,7-10 | INV. H02H9/02 |
| A | * 16, 17, 22-30 und 34-41; Abbildungen 1-6 * | 6 | H01F38/02 H01F3/10 |
| | - - - - - | | H01F27/40 |
| X | US 2 283 697 A (PRINCE DAVID C) 19. Mai 1942 (1942-05-19) | 1-5,7-10 | |
| A | * Spalte 3, Z. 13 - Spalte 7, Z. 12; Abbildung 1 * | 6 | |
| | - - - - - | | |
| A | JAFARI ALIREZA ET AL: "Controllable DC Fault Current Limiter with Loss Reduction", 2023 14TH POWER ELECTRONICS, DRIVE SYSTEMS, AND TECHNOLOGIES CONFERENCE (PEDSTC), IEEE, 31. Januar 2023 (2023-01-31), Seiten 1-5, XP034325107, DOI: 10.1109/PEDSTC57673.2023.10087155 [gefunden am 2023-04-05] * Sektion II. Principle operation of PM based FCL * | 1 | |
| | - - - - - | | **RECHERCHIERTE SACHGEBIETE (IPC)** |
| A | LI Q ET AL: "Modelling methodology and experimental verification of the permanent-magnet-biased saturation-based fault current limiter", IET ELECTRIC POWER APPLICATIONS, IET, UK, Bd. 6, Nr. 8, 6. September 2012 (2012-09-06), Seiten 504-512, XP006041325, ISSN: 1751-8660, DOI: 10.1049/IET-EPA.2012.0032 * Tabelle 1 * | 1 | H01F H02H |
| | - - - - - | | |

Der vorliegende Recherchenbericht wurde für alle Patentansprüche erstellt

| Recherchenort | Abschlußdatum der Recherche | Prüfer |
|---|---|---|
| München | 11. Februar 2025 | Brächer, Thomas |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................................
& : Mitglied der gleichen Patentfamilie, übereinstimmendes Dokument

**ANHANG ZUM EUROPÄISCHEN RECHERCHENBERICHT
ÜBER DIE EUROPÄISCHE PATENTANMELDUNG NR.**

EP 24 20 5491

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-02-2025

| Im Recherchenbericht angeführtes Patentdokument | Datum der Veröffentlichung | Mitglied(er) der Patentfamilie | Datum der Veröffentlichung |
|---|---|---|---|
| JP 2017131032 A | 27-07-2017 | JP 2017131032 A<br>WO 2017126486 A1 | 27-07-2017<br>27-07-2017 |
| US 2283697 A | 19-05-1942 | KEINE | |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CN 112311366 A

- CN 113872170 A

**In der Beschreibung aufgeführte Nicht-Patentliteratur**

- **R. BLEILEVENS** ; **A. MOSER**. Simplified Short Circuit Current Calculation for DC Distribution Grids based on a Superposition Approach using Approximated Current Courses. *2020 5th IEEE Workshop on the Electronic Grid (eGRID)*, 2020
- **D. PETROPOULOS** ; **L. MACKAY** ; **L. RAMIREZ-ELIZONDO** ; **M. POPOV** ; **P. BAUER**. Transient analysis of DC distribution grids. *2017 IEEE Second International Conference on DC Microgrids (ICDCM)*, 2017
- **R. RODRIGUES** ; **Y. DU** ; **A. ANTONIAZZI** ; **P. CAIROLI**. A Review of Solid-State Circuit Breakers. *IEEE Trans. Power Electron. (IEEE Transactions on Power Electronics)*, 2021

- **Z. LIN** ; **J. JIN** ; **Q. YIN** ; **Y. LIU** ; **J. XU** ; **X. ZENG**. Study on Coordination of Resistive-Type Superconducting Fault Current Limiter and DC Circuit Breaker in HVDC system. *5th Asia Conference on Power and Electrical Engineering (ACPEE)*, 2020
- **A. HOSSEINZADEH** ; **H. HEYDARI**. A Fast Fault Detection Method for Protection of HVDC Transmission using Voltage of The PMFCL. *10th Iranian Conference on Renewable Energy & Distributed Generation (ICREDG)*, 2023